# EUROPEAN PATENT SPECIFICATION

(11) **EP 0 493 558 B1**
(45) Date of publication and mention of the grant of the patent: **22.09.1999**
(21) Application number: 91912890.0
(22) Date of filing: 18.07.1991
(51) Int. Cl.: A01N 25/34, A01N 25/04, B65D 65/38

(54) **GEL FORMULATIONS FOR USE IN TOXIC OR HAZARDOUS PRODUCT CONTAINERISATION SYSTEMS**
GELFORMULIERUNG ZUR VERWENDUNG IN BEHÄLTERSYSTEMEN FÜR GIFTIGE ODER GEFÄHRLICHE STOFFE
FORMULATION DE GELS S'UTILISANT DANS DES SYSTEMES DE CONTENEURISATION DE PRODUITS TOXIQUES OU DANGEREUX

(30) Priority: 18.07.1990 US 554615; 04.04.1991 US 680590
(43) Date of publication of application: 08.07.1992
(73) Proprietor: RHONE-POULENC AGROCHIMIE, 69009 Lyon (FR)
(72) Inventor: CHEN, Chi-Yu, R., Raleigh, NC 27615 (US); GOUGE, Samuel, T., Raleigh, NC 27614 (US); HODAKOWSKI, Leonard, E., Raleigh, NC 27615 (US); WEBER, Paul, J., Durham, NC 27713 (US)
(74) Representative: Bentham, Stephen
(86) International application number: EP9101352
(87) International publication number: WO9201378

(56) References cited:
- EP-A- 0 347 220
- EP-A- 0 420 497
- EP-A- 0 449 773
- WO-A-91/05714
- GB-A- 2 067 407
- US-A- 2 870 058
- US-A- 3 171 779
- US-A- 3 630 896
- US-A- 3 892 905
- PATENT ABSTRACTS OF JAPAN vol. 4, no. 30 (C-2)(512) 15 March 1980 & JP,A,55 004 336 ( KIYOURITSU SANITARII K.K. ) 12 January 1980 see abstract & WPI, FILE SUPPLIER, Derwent Publications Ltd., London, GB; AN=80-13757C (08) see abstract
- WORLD PATENTS INDEX LATEST Section Ch, Week 8739, 25 November 1987 Derwent Publications Ltd., London, GB; Class C, AN 87-274684/39 & JP,A,62 192 301 (KAGAKU E C KOGYO KK) 22 August 1987 see abstract
- RESEARCH DISCLOSURE, no.289, may 1988, pages 281-284, New York, NY, US, see page 281, column 1, paragraph 1 see page 283, column 1, paragraph 3 - column 2, paragraph 3
- Römpps Chemie-Lexikon, 1988, page 4250-1, Franckh'sche Verlagsbuchhandlung Stuttgart

## Description

The invention relates to new containerisation systems containing water dispersible organic gels. These containerisation systems are suitable for containing hazardous products to render them safer to handle and for the environment.

At present, most hazardous liquids are stored in metal drums or, where smaller quantities are required, plastic containers.

Hazardous compounds, especially agrochemical compounds are formulated in various compositions. Liquid composition are most convenient for farmers because of the relative ease with which they can be handled. There are, nevertheless, difficulties in handling such liquid compositions. There is a danger of spillage of leakage if there are holes in the containers previously used or if they are dropped. Although secure containers resistant to shock can be used, in the event of an accident, for example during transportation, the risk remains of spillage or leakage with rapid loss of liquid, for example leaking onto the ground.

It has been difficult to provide a formulation and a containerisation system (i.e. container) which safeguards those handling it, including farmers and transporters, and the environment.

It is known to have agrochemicals in soluble bags or sachets, see for example EP-A-0,347,220 and EP-A-0,449,773 (published after the priority date of the present application). That does not avoid completely the possibility of the bag cracking and breaking and the liquid creating a contamination problem. More specifically, when water soluble bags are used, the agrochemical compositions contained in the bag are organic ones, that is to say nonaqueous solvent-based compositions and, more or less, the solvent has the tendency to extract the adjuvant and additives of the film and to render the wall (film) of the bag more brittle (especially at low temperature and more specifically at temperature below 0°C) or to reduce its service life.

It was known to use gel formulations for pharmaceuticals or cosmetics, but there is practically no risk of pollution or contamination of environment when handling such products, in contrast to pesticides and agrochemicals. Furthermore the gels used for pharmaceutical or cosmetical purposes are generally water-based, so that it was unobvious to obtain gels which are convenient for water soluble sachets or bags, nor for agrochemicals containing water soluble sachets or bags, nor for shock absorption purposes for such bags.

Furthermore, and in a practical point of view, higher concentrations of active ingredient may be obtainable when using gels instead of liquids.

The present invention seeks to provide a new cotainerisation system containing agrochemicals which are safe for everybody, specially the farmer and those who handle the agrochemicals.

The invention also seeks to provide new formulation system for agrochemicals which is easy to put in a containing system and which is easy to manipulate by the farmer.

The invention also seeks to provide a new formulations system for agrochemicals which are readily soluble and/or dispersible in water. This is a problem which is especially difficult to overcome because the increase in viscosity is often connected with an increased difficulty to disperse in water.

The invention also seeks to provide a new formulation system for agrochemicals which is as condensed as possible, using the least amount of space.

The invention also seeks to provide a new formulation system to contain hazardous compounds, e.g., agrochemicals which reduce the risk of contamination.

The invention also seeks to provide a new formulation system to contain smelling or stinking compounds, e.g., agrochemicals which remove the odors or reduce odor problems.

The invention also seeks to avoid breakage of the container that contains an agrochemical formulation. When the container is brittle and rigid, there is a distinct possibility of simple breakage, but the liquid still transmits the shocks and there is the problem of hydraulic hammer effect. The invention seeks to avoid, or at least partially reduce, this hydraulic hammer effect. The invention also seeks to provide a cotainerisation system for hazardous compounds that dissipate, as much as possible, the energy of an external shock to a container.

The invention also seeks to provide a shock absorbing formulation system for containing agrochemicals, e.g., pesticides or plant protection agents or plant protection agents or plant growth regulators.

The invention also seeks to provide a containerisation system which further extends the service life of the water soluble bag or sachet during storage, such as preventing the bag film from becoming brittle at freezing temperature.

The invention further seeks to provide a new formulation system for agrochemicals which quickly dissolve when put into water and which is not damaged by normal freezing.

The invention further seeks to provide a new formulation system for agrochemicals which reduces the risks of clogging the spray nozzles or the filters of spray tanks.

The present invention provides a containerisation system comprising a water dispersible organic gel in a water soluble or water dispersible bag, wherein the gel is a continuous system having a phase difference phi between the controlled shear stress and the resulting shear strain such that tg(phi) is less than or equal to 1.5 and having a spontaneity less than 75, and which comprises:
a hazardous product;
optionally organic solvent,
a water soluble or water dispersible surfactant;
a gelling agent; and
a plasticising agent which is a compound able to reduce the glass transition temperature of polyvinyl alcohol to below room temperature.

The invention also provides the use of a compound which is able to reduce the glass transition temperature of polyvinyl alcohol to below room temperature in a water dispersible organic gel contained in a water soluble or water dispersible bag, as a plasticising agent which imparts and maintains softness in the bag, wherein the gel is a continuous system having a phase difference phi between the controlled shear stress and the resulting shear strain such that tg(phi) is less than or equal to 1.5 and having a spontaneity less than 75, and which gel comprises:
a hazardous product;
optionally organic solvent;
a water soluble or water dispersible surfactant;
a gelling agent; and
a plasticising agent.

The gelling agent or thickener is a compound that substantially increases the viscosity of an organic solution.

The gelling agent which is used in the present invention may be liquid or preferably solid. The gelling agent is preferably soluble at a concentration of at least 10% by weight in a liquid mixture of the hazardous product, surfactant and organic solvent, if present, at a temperature above 50°C. If solid, it generally has a particle size of less than 100 microns, preferably less than 40 microns, more preferably less than 20 microns and most preferably less than 10 microns.

Preferred gelling agents include tetramethyl decyne diol, ethoxylated dialkylphenol, methylated clay, propylene carbonate, hydrogenated castor oil, ethoxylated vegetable oil, diatomaceous earth, mixtures of dioctyl sodium sulfosuccinate and sodium benzoate, mixtures of hexanediol and hexynediol, and a polyacrylic acid polymer or copolymer, optionally in the form of a salt and optionally crosslinked (e.g. partially crosslinked).

By the word surfactant, it is meant an organic material which substantially reduces the surface tension of water.

Surfactants which are particularly suitable for the invention are defined by the following test: according to this test, the liquid active ingredient in organic solvent, if present in the gel, (50g in total) and surface-active adjuvant (5g) are added to an amount of water, at 50°C, which is sufficient to bring the volume of the mixture to 100ml; the mixture is agitated so as to give a homogeneous emulsion and this is left to stand for 30 mintues at 50°C in a graduated cylinder; the amount of oily layer which may have separated out (and thus formed a distinct liquid phase) must then be less than 20 ml.

The surfactant that is used in the invention may be nonionic, anionic or actionic, or may be zwitterionic. Amphoteric surfactants may be used. A mixture of surfactants may also be used. Preferably the surfactant is able to form a liquid mixture, preferably a liquid phase, with hazardous product and organic solvent, if present, at a temperature above 70°C, preferably above 50°C. This liquid mixture may be in the form of a single continuous phase or of an emulsion. Another preferable feature of the surfactant is that it contains at least 10% of a surfactant having hydroxy and/or alcoxy groups, such as polyethoxylated or polyproxylated derivatives. Especially preferred are derivatives of fatty amine or fatty acids or fatty alcohols or aryl phenols.

Preferred surfactants include noninonic surfactants,
optionally mixed with an ionic surfactant, and
which are able to form a liquid mixture with the hazardous product and organic solvent, if present, at a temperature above 50°C, preferably above 70°C.

The hereinbefore defined gel may optionally contain the further following components:
an organic or mixture of organic solvents in which therein the hazardous product is soluble e.g. completely soluble at room temperature;
a dispersant;
a secondary thickener;
   such as a polyacrylic acid polymer, optionally in the form of a salt or a copolymer and optionally cross-linked (eg. partially cross-linked); fumed silica; hydroxyethyl cellulose carboxy-methylcellulose; organically modified attapulgite or montmorillonite clay; hardened castor oil; cetyl and stearyl alcohols or esters; polyethylene glycols; glycerol hydroxystearate, polyvinylalcohol (of low molecular weight), dioctyl sodium sulfosuccinate and sodium benzoate; alkyl benzene sulfonates; xantham gum, polyvinylpyrrolidone; or polyvinyl acetate;
other additives such as antifoam agents, stabilizers, buffers and antifreezing agents.

Among the gels used in the invention as hereabove defined, some particular gels are preferred, especially those comprising by weight:
5 to 95%, preferably 10 to 90%, more preferably 25 to 80%, of hazardous product;
1 to 50%, more preferably 2 to 20%, of surfactant;
0.1 to 50%, preferably 0.5 to 10% of gelling agent;
0 to 80%, preferably 3 to 50%, of solvent;
0 to 20% preferably 0.1 to 10% of plasticising agent;
optionally 0.1 to 20%, preferably 2 to 8%, of a dispersant; and
0 to 20%, preferably 0.1 to 10%, of other additives,

The plasticising agent which may be used in the invention is a compound that is able to reduce the glass transition temperature of polyvinyl alcohol to below room temperature.

Furthermore this plasticising agent is preferably compound that is water soluble or water dispersible and is soluble at a concentration of at least 0.1% by weight in a liquid mixture of the hazardous product, the surfactant and optionally organic solvent, if present.

The plasticising agent, may for example be selected from: alcohols compounds (linear or branched, saturated or unsaturated), especially alcenols having, from 6 to 36 carbon atoms; alcenols having from 10 to 30 carbon atoms; glycols and triols such as di- and tri-pentaerythritol, trimethylolethane, anhydroenneaheptitol, butanetriol, hexanetriol, erythritols, threitols, ribitol, arabinitols, xylitol, allitol, dulcitol, glucitol, sorbitol mannitol, altritol, iditol, maltitol, lactitol, ethyleneglycol, diethyleneglycol, triethyleneglycol, trimethyleneglycol, tetramethyleneglycol, pentamethyleneglycol, hexamethyleneglycol, propyleneglycol, glycerol, 2,3-butanediol, 1,3-butanediol,; mono-, di-, tri-, tetra-, and poly-amines, such as diethylenetriamine and ethanolamines; amides, e.g., acetamide and formamide, dimethylformamide, hexamethylphosphotriamide; sulfoxides, e.g., dimethylsulfoxide; piperazines.

The plasticising agents (or bag softener) that may be used in invention as described above impart and maintain softness to a container such as a bag containing the gel. They thus help to prevent the container from breaking during handling or storage,
especially at low freezing temperatures (e.g., under -20°C). Thus there is little chance for contamination or pollution to occur under these severe conditions.

According to a particular feature of the invention, the components of the compositions used in the invention are chosen in such a way that one or more of the following feature are present:
* the resulting gels have a viscosity of 500 to 30,000 centipoise, more preferably of 1000 to 12000 centipoise (these viscosities are Brookfield viscosities measured with a viscosimeter in the form or a flat plan rotating at 20 revolutions per minute)
* the gel has a phase difference phi between the controlled shear stress and the resulting shear strain such that tg(phi) is less than or equal to 1.2 Tg(phi) is the tangent of the angle phi (or phase difference). The measurement of phi is made by means of a rheometer having a flat fixed plate and a rotating cone above this plate such that the angle between them is less than 10°, preferably less than 4°. The cone is caused to rotate by means of a controlled speed motor; the rotation is a sinusoidal one, i.e., the torque and the angular displacement change as a sine function with time. This angular displacement corresponds to the hereabove mentioned shear strain; the torque of the controlled speed motor (which causes the angular displacement) corresponds to the hereabove mentioned controlled shear stress
* the gels preferably have a specific gravity greater than 1, preferably greater than 1.05, more preferably greater than 1.1.
* the gels have a spontaneity (as hereafter defined) less than 25.

By the expression "continuous system," it is meant a material which is visually homogeneous, that is to say which has the visual appearance of having only one physical phase; this does not exclude the possibility of having small solid particles dispersed therein, provided these particles are small enough not to constitute a visible separate physical phase.

It is known that a gel is generally a colloid in which the dispersed phase has combined with the continuous phase to produce a viscous, jelly-like product; it is also a dispersed system consisting typically of a high molecular weight compound or aggregate of small particles in very close association with a liquid.

By the expression "hazardous product" as used herein is meant a product that may cause damage to the environment or be injurious to a person handling it.

According to one main and preferred feature of the invention, the hazardous product is an active ingredient which is an agrochemical, and more precisely a pesticide or a plant protection agent (including plant growth regulators or plant nutrient).

The invention is not limited to some specific agrochemicals; a list of many agrochemicals which can be used in the invention includes:
Fungicides such as Triadimefon, Tebuconazole, Prochloraz, Triforine, Tridemorph, Propiconazole, Primicarb, Iprodione, Metalazyl, bitertanol, Iprobenfos, Flusilazol, fosetyl, Propyzamide, Chlorothalonil, Dichlone, Mancozeb, Antraquinone, Maneb, Vinclozolin, Fenarimol, Bendiocarb, Captafol, Benalaxyl, Thiram,
Herbicides (or defoliants) such as quizalofop and its derivatives, Acetochlor, Metolachlor, Imazapur And Imazapyr, Glyphosate And Gluphosinate, Butachlor, Acifluorfen, Oxyfluofen, Butralin, Fluazifop-butyl, Bifenox, Bromoxynil, Ioxynil, Diflufenican, Phenmedipham, Desmedipham, Oxadiazon, Mccopropo. MCPA, MCPB, MCPP, Linuron, Isoproturon, Flamprop And Its Derivatives, Ethofumesate, Diallate, Carbetamide, Alachlor, Metsulfron, Chlorsulfron, Chlorpyralid, 2,4-d) Tribufos, Triclopyr, Diclofop-methyl, Sethoxydim, Pendimethalin, Trifluralin, Ametryn, Chloramben, Amitrole, Asulam, Dicamba, Bentazone, Atrazine, Cyanazine, Thiobencarb, Prometryn, 2-(2-chlorobenzyl)-4, 4-dimethyl-1, 2-oxazolidine-3-one, Fluometuron, Napropamide, Paraquat, Bentazole, Molinate, Propachlor, Imazaquin, Metribuzin, Tebuthiuron, Oryzalin,
Insecticides or nemoticides such a Ebufos, Carbosulfan, Amitraz, Vamidothion, Ethion, Triazophos, Propoxur, Phosalone, Permethrin, Cypermethrin, Parathion, Methylparathion, Diazinon, Methomyl, Malathion, Lindane, Fenvalerate, Ethoprophos, Endrin, Endosulfan, Dimethoate, Dieldrin, Dicrotophos, Dichlorprop, Dichlorvos, Azinphos And Its Derivatives, Aldrin, Cyfluthrin, Deltamethrin, Disulfonton, Chordimeform, Chlorpyrifos, Carbaryl, Dicolfol, Thiodicarb, Propargite, Demeton, Phosalone,
Plant growth regulator such a gibberellic acid, ethyl or ethephon, cycocel, Chlormequat, Ethephon, Mepiquat.

Among those many agrochemicals, the following are of particular interest: the organophosphorus insecticides and the hydorxybenzonitriles herbicides such as bromoxynil or ioxynil either in the form of a salt or an ester.

In order to assess whether a surface-active adjuvant possesses dispersing properties and may be a dispersant according to the invention, the following test is carried out: an aqueous suspension (100ml) containing kaolin or atrazine (50g), in the form of solid particles having a particle size between 1 and 10 microns, and surface-active adjuvant (5g) is left to stand at 20°C for 30 minutes in a graduated cylinder (kaolin is used when the dispersing agent is able to disperse a hydrophilic solid. Atrazine is used when the dispersing agent is able to disperse a hydrophobic solid). After standing, 9/10ths (nine-tenths) of the volume of the suspension, situated in the upper part of the suspension, is removed, without agitation, and the solids content (residue after evaporation of the water) of the remaining tenth is measured; this solids content must not exceed 12% by weight of the solids content of 100 ml of the suspension on which the test is carried out.

The spontaneity is assessed according to the following method: A mixture of 1 ml gel with 99 ml water are put into a 150 ml glass tube which is stoppered and inverted through 180° (upside down). The number of times required to completely disperse the gel is called the spontaneity.

A thickener is a compound which increases the viscosity of a gel or a liquid.

The surfactant that may be used in the invention may be selected from those of the following list (which is non-limitative): salts of lignosulphonic acids, salts of phenyl sulphonic or naphthalene sulphonic acids; poly condensates of ethylene oxide with fatty alcohols, fatty acids, fatty esters, or fatty amines, or substituted Phenols (particularly alkyphenols or arylphenols); salts of sulphosuccinic acid esters; taurine derivatives (particularly alkyltaurates); phosphoric esters of alcohols or of polycondensates of ethylene oxide with phenols; esters of fatty acids with polyols; and sulphate, sulphonate and phosphate functional derivatives of the above compounds.

The dispersants that may be used in the invention may be selected from those of the following list (which is non-limitative: condensed naphthalene sulfonic acid; polyacrylic acid; sodium sulfosuccinate, calcium lignosulfonate, glycerol stearate, poly condensate of ethylene oxide and propylene oxide.

The chemical nature of the enveloping film constituting the bags which may contain the composition/gels of the invention can vary quite widely. Suitable materials are water soluble (or possibly water dispersible) materials which are insoluble in the organic solvents used to dissolve or disperse the agrochemical active ingredient. Specific suitable materials include polyethylene oxide, such as polyethylene glycol; starch and modified starch; alkyl and hydroxyalkylcellulose, such as hydroxymethylcellulose, hydroxyethylcellulose, hydroxypropylcellulose; carboxymethylcellulose; polyvinylethers such as poly methy vinylether; poly(2,4-dimethyl-6-triazinylethylene; poly(vinylsulfonic acid); polyanhydrides; low molecular weight urea-formaldehyde resins; low molecular weight melamine-formaldehyde resins; poly(2-hydroxyethyl methacrylate); polyacrylic acid and its homologs; but preferably the enveloping film comprises or is made from polyvinylalcohol (PVA). PVA is generally partially or fully alcoholysed or hydrolysed, e.g., 40-100%, preferably 80-99% alcoholysed or hydrolysed, polyvinyl acetate film.

Preferred material for constituting the bags for the gels of the invention are polyethylene oxide or methylcellulose, or polyvinylalcohol. When polyvinylalcohol is used, it is advantageously a 40-100%, preferably 80-99% alcoholysed or hydrolysed, polyvinyl acetate film.

The gels used in the invention are generally very easy to make, simply by mixing the components, optionally with grinding or milling.

In order to made a bag, the film must be shaped (possibly partially sealed) and then filled with the gel. Generally the gels are able to flow, even if it is a slow rate due to the high viscosity. a container which is used to contain the gels cannot be easily emptied due to this high gel viscosity (that is a reason why the gels have not been used up to now in agriculture). When filled, the bag must be finally sealed, generally heat sealed, to be closed.

Further information may be found in the following copending applications, the disclosures of which are incorporated herein by reference: application of David Edwards and William McCarthy for "Laminated Bags for Containerization of Toxic or Hazardous Materials" filed April 4, 1991; application of Samuel T. Gouge, Leonard E. Hodakowski, Chi-Yu R. Chen and Paul J. Weber for "Gel Formulations for Hazardous Products" filed April 4, 1991; application of Leonard E. Hodakowski, Chi-Yu R. Chen, Samuel T. Gouge and Paul J. Weber for "Water Dispersible Gel Formulations" filed April 4, 1991; application of Leonard E. Hodakowski, Ricky W. Couch, Samuel T. Gouge and Robert C. Ligon for "Gel Formulations" filed April 4, 1991; and application of Samuel T. Gouge, David P. Downing, Spencer B. Cohen, Allan J. Luke, Robert D. McLaughlin and James E. Shue for "Bag In A Bag For containerization of Toxic or Hazardous Material" filed April 4, 1991.

The following examples are given for illustrative purposes and should not be understood as restricting the invention.

In these examples, tg(phi) is less than 1.5

### EXAMPLE 1

A gel is made by stirring at 50°C a mixture of:
Active ingredient: 2,4-D phenoxy benzoic acid isooctyl ester): 64.8%
Solvent: aromatic solvent with flash point of 65°C: 23.2%
Surfactant: a mixture of
   a non ionic/sulfonate blended emulsifier 4%
   and calcium alkylbenzene sulfonate 1%
Gelling agent: mixture of dioctylsulfosuccinate salt and sodium benzoate 6%
plasticising agent: ethylene glycol 1%.

The mixture is stirred and shaked until each component is dissolved or dispersed.

During stirring, a dissolution appears, and thereafter a gelation. Gelation is increased during the cooling at room temperature (20°C).

The brookfield viscosity of the gel is 3000 centipoise.

The emulsion stability is good in the above described test.

1100 g of this gel are put in a 1 liter bag made of a film of PVA (88% hydrolysed Polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m onto the ground. No breaking or leakage is observed.

Another bag of the sample is also made and stored at -20°C for 3 days. The bag is then dropped 5 times from 1.2 m onto the ground. No breaking or leakage is observed.

The bag is put in a tank containing water under gentle agitation (that is to say such as that obtained with pump recycling). It is dispersed within a 3 min interval. There is no clogging in the filter, which is a 100 mesh screen.

### EXAMPLE 2

The procedure of example 1 is repeated, except that a mixture containing the following adjuvants is used:
Surfactant: non ionic/sulfonate blended emulsifier: 5.2%
Gelling agent: tetramethyl decynediol 30%

The bookfield viscosity of the gel is 3000 centipoises.

The emulsion stability is good in the above described test.

1100 g of this gel are put in a 1 liter bag made of a film of PVA (88% hydrolysed polyvinly acetate; cold water soluble; thickness: 55 microns). The bag, which is almost full (about 95% v/v), is heat sealed. The density both of the gel and of the bag containing the gel is 1.1.

The bag is then dropped 10 times from 1.2 m onto the ground. No breaking or leakage is observed.

Another bag of this sample is also made and stored at -20°C for 3 days. The bag is then dropped 5 times from 1.2 m onto the ground. No breaking or leakage is observed.

The bag is put in a tank containing water under gentle agitation (that is to say such as that obtained with pump recycling). It is dispersed within a 3 minute interval. There is no clogging in the filter, which is a 100 mesh screen.

### EXAMPLE 3

The procedure of example 1 is repeated, except that a mixture containing the following adjuvants is used:
Surfactant: non ionic/sulfonate blended emulsifier: 21.5%
   and calcium alkylbenzene sulfonate: 3.7%
Gelling agent: ethoxylated dialkyphenol 10%
plasticising agent: a mixture of ethylene glycol and water at 9 to 1 weight ratio 1%
   The brookfield viscosity of the gel is 3500 centipoise.
   The emulsion stability is good in the above described test.

1100 g of this gel are put in a 1 liter bag made of film of PVA (88% hydrolysed polyvinyl acetate; cold water soluble; thickness: 55 microns). the bag, which is almost full (about 95% v/v), is heat sealed. The density both of the gel and of the bag containing the gel is 1.1.

The bag is then dropped 10 times from 1.2 m onto the ground. No breaking,or leakage is observed.

The bag is put in a tank containing water under gentle agitation (that is to say such as that obtained with pump recycling). It is dispersed within a 3 min interval. There is no clogging in the filter, which is a 100 mesh screen.

### EXAMPLE 4

A gel is made by stirring at 50°C a mixture of:
active ingredient:
   bromoxynil acid (as the octanoate ester): 30.15%
   bromoxynil acid (as the heptanoate ester): 31.15%
Solvent: aromatic solvent with a flash point of 38°C: 21.85%
surfactant: polyaryl phenolethoxylated 6.0%
   calcium alkylbenzene sulfonate 2.0%
Gelling agent mixture: a clay which has been modified by addition of methyl groups 6.0%
   and propylene carbonate 2.0%
plasticising agent: ethylene glycol 1%

These materials are mixed together while shearing with attritor mixer. The product started to gel in a few minutes.

The brookfield viscosity of the gel is 4200 centipoise.

The emulsion stability is good in the above described test.

The spontaneity is 38.

1100g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the hag containing the gel is 1.1.

The bag is then dropped 10 times from 1.2 m onto the ground. No breaking or leakage is observed.

Another bag of this sample is also made and stored at -20°C for 3 days. The bag is then dropped 5 times from 1.2 m onto the ground. No breaking or leakage is observed.

The bag is put in a tank containing water under gentle agitation (that is to say such as that obtained with pump recycling). It is dispersed within a 3min interval. There is no clogging in the filter, which is a 100 mesh screen.

### EXAMPLE 5

The procedure of example 4 is repeated, except that a mixture containing the following components is used:
active ingredient:
   bromoxynil acid (octanoate ester): 18.65%
   bromoxynil acid (heptanoate ester): 13.85%
   methylchloropropionic acid (isoctyl ester): 37.4%
Solvent: Aromatic solvent with a flash point of 38°C: 10.1%
Surfactant: non ionic/sulfonate blender emulsifier: 13%
Gelling agent mixture:
   hydrogenated castor oil 3%
   ethoxylated vegetable oil 3%
plasticising agent: ethylene glycol 1%

These materials are mixed together while shearing with attritor mixer. The product started to gel in a few minutes.

The brookfield viscosity of the gel is 3150 centipoise.

The emulsion stability is good in the above described test.

The spontaneity is 20.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m onto the ground. No breaking or leakage is observed.

Another bag of this sample is also made and stored at -20°C for 3 days. The bag is then dropped 5 times from 1.2 m onto the ground. No breaking or leakage is observed.

The bag is put in a tank containing water under gentle agitation (that is to say such as that obtained with pump recycling). It is dispersed within a 3 min interval. There is no clogging in the filter, which is a 100 mesh screen.

### EXAMPLE 6

The procedure of example 5 is repeated except that a mixture containing the following components is used:
active ingredient:
   bromoxynil octanoate: 18.4%
   bromoxynil heptanoate: 14.0%
   methyl chloropropionic acetic acid (isocytl ester): 36.6%
Surfactant mixture: non ionic/sulfonate blended emulsifier: 9.0%
   and dioctyl ester of sodium sulfosuccinic acid and sodium benzoate: 2.0%
Gelling agent: diatomaceous earth: 17.0%
Dispersant: sodium sulfonic of naphthalene formaldehyde condensate: 3.0%
plasticising agent: a mixture of ethylene glycol and water at 9 to 1 weight ratio: 1%

These materials are mixed together while shearing with attritor mixture. The product started to have the appearance of a smooth paste, and is a gel in few minutes.

The Brookfield viscosity of the gel is 9000 centipoises.

The emulsion stability is good in the above described test.

The spontaneity is 9.

1100 g of this gel are put in a 1 liter bag made of a film of PVA (88% hydrolyzed polyvinyl acetate; cold water soluble; thickness; 55 microns). The bag, which is almost full (about 95% v/v), is heat sealed. The density both of the gel and of the bag containing the gel is 1.1.

The bag is then dropped 10 times from 1.2 m onto the ground. No breaking or leakage is observed.

Another bag of sample is also made and stored at -20°C for 3 days. The bag is then dropped 5 times from 1.2 m onto the ground. No breaking or leakage is observed.

The bag is put in a tank containing water under gentle agitation (that is to say such as that obtained with pump recycling). It is dispersed within a 3 mn interval. There is no clogging in the filter which is a 100 mesh screen.

### EXAMPLE 7

The procedure of example 1 is repeated, except that a mixture containing the following adjuvants is used:
plasticising agent: tetrahydrofurfural alcohol 1%

The mixture is stirred and shaken until each component is dissolved or dispersed.

During stirring, a dissolution appears, and thereafter a gelation. Gelation is increased during the cooling at room temperature (20°C).

The brookfield viscosity of the gel is 3000 centipoise. the emulsion stability is good in the above described test.

The emulsion stability is good in the above described test.

1100g of this gel are put in a 1 liter bag made of a film of PVA (88% hydrolysed Polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m onto the ground. No breaking or leakage is observed.

Another bag of this sample is also made and stored at -20°C for 3 days. The bag is then dropped 5 times from 1.2 m onto the ground. No breaking or leakage is observed.

The bag is put in a tank containing water under gentle agitation (that is to say such as that obtained with pump recycling). It is dispersed within a 3mn interval. There is no clogging in the filter, which is a 100 mesh screen.

### EXAMPLE 8

The procedure of example 1 is repeated, except that a mixture containing the following material is used:
active ingredient
   bromoxynil acid (as the octanoate ester): 30.15%
   bromoxynil acid (as the heptanoate ester): 31.15%
Solvent: aromatic solvent with a flash point of 38°C: 23.7%
Surfactant: polyaryl phenolethoxylated 6.0%
   calcium alkylbenzene sulfonate 2.0%
Gelling agent: mixture of dioctylsulfosuccinate salt and sodium benzoate 6%
plasticising agent: ethylene glycol 1%

The Brookfield viscosity of the gel is 3000 centipoises. The emulsion stability is good in the above described test.

The emulsion stability is good in the above described test:

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is the dropped 10 times from 1.2 m onto the ground. No breaking or leakage is observed.

Another bag of sample is also made and stored at -20C for 3 days. The bag is then dropped 5 times from 1.2 m onto the ground. No breaking or leakage is observed.

The bag is put in a tank containing water under gentile agitation (that is to say such as that obtained with pump recycling). It is dispersed within a 3 mn interval. There is no clogging in the filter which is a 100 mesh screen.

### EXAMPLE 9

The procedure of example 1 is repeated, except that a mixture containing the following material is used:
active ingredient:
   bromoxynil acid (as the octanoate ester): 33.4%
   methylchloropropionic acetic acid (isooctyl ester) 35.6%
Solvent: aromatic solvent with a flash point of 38°C: 20.5%
Surfactant: polyaryl phenolethoxylated 4.5%
   calcium alkylbenzene sulfonate 0.5%
Gelling agent: mixture of dioctylsulfosuccinate salt and sodium benzoate 5%
plasticising agent: ethylene glycol 0.25%
Defoamer: substituted acetylenic diol 0.25%

The brookfield viscosity of the gel is 3000 centipoise.

The emulsion stability is good in the above described test.

1100 g of this gel are put in a 1 liter bag made of a film of PVA (88% hydrolysed polyvinyl acetate; cold water soluble; thickness: 55 microns). The bag, which is almost full (about 95% v/v), is heat sealed. The density both of the gel and of the bag containing the gel is 1.1.

The bag is then dropped 10 times from 1.2 m onto the ground. No breaking or leakage is observed.

Another bag of this sample is also made and stored at -20°C for 3 days. The bag is then dropped 5 times from 1.2 m onto the ground. No breaking or leakage is observed.

The bag is put in a tank containing water under gentle agitation (that is to say such as that obtained with pump recycling). It is dispersed within a 3 min interval. There is no clogging in the filter, which is a 100 mesh screen.

## Claims

1. A containerisation system comprising a water dispersible organic gel in a water soluble or water dispersible bag, wherein the gel is a continuous system having a phase difference phi between the controlled shear stress and the resulting shear strain such that tg(phi) is less than or equal to 1.5 and having a spontaneity less than 75, and which comprises:
a hazardous product;
optionally organic solvent;
a water soluble or water dispersible surfactant;
a gelling agent; and
a plasticising agent which is a compound able to reduce the glass transition temperature of polyvinyl alcohol to below room temperature.

2. A containerisation system according to claim 1 wherein the hazardous product is an agrochemical.

3. A containerisation system according to claim 1 or 2 wherein the hazardous product is a pesticide, a plant protection agent, a plant growth regulator or a plant nutrient.

4. A containerisation system according to claim 1, 2 or 3, wherein the gelling agent is a solid soluble at a concentration of at least 10% by weight in water and at least 10% by weight in a liquid mixture of hazardous product, surfactant and organic solvent, if present, at a temperature above 50°C.

5. A containerisation system according to claim 4 wherein the gelling agent has a particle size less than 40 microns.

6. A containerisation system according to claim 5 wherein the gelling agent has a particle size less than 10 microns.

7. A containerisation system according to any one of the preceding claims wherein the plasticizing agent is a glycol or triol or ethanolamine, dimethylformamide or dimethylsulphoxide.

8. A containerisation system according to any one of the preceding claims, wherein the plasticising agent is a compound which is water soluble or water dispersible and is soluble at a concentration of at least 0.1% by weight in the liquid mixture of hazardous product, the surfactant and organic solvent, if present.

9. A containerisation system according to any one of the preceding claims wherein the surfactant is able to form a liquid mixture with the hazardous product in organic solvent, if present, at a temperature above 70°C.

10. A containerisation system according to claim 9 wherein the surfactant is able to form a liquid mixture with the hazardous product in organic solvent, if present, at a temperature above 50°C.

11. A containerisation system according to any one of the preceding claims wherein the gel further comprises one or more of the following:
an organic solvent or a mixture of solvents in which the hazardous product is soluble at the concentration in the gel;
a dispersant;
a thickener which is water soluble or water dispersible and which is soluble at a concentration of at least 5% by weight in a liquid mixture of the hazardous product in organic solvent, if present and surfactant; and/or
another additive which is an antifoam agent, a stabiliser, a buffer, or an antifreezing agent.

12. A containerisation system according to any one of the preceding claims wherein the gel comprises by weight:
10 to 90% of hazardous product,
1 to 50% of surfactant,
0.1 to 50% of gelling agent,
0 to 80% of solvent,
0.1 to 20% of plasticising agent, and
0 to 20 of other additives as defined in claim 11.

13. A containerisation system according to claim 12 wherein the gel comprises by weight:
25 to 80% of hazardous product,
2 to 20% of surfactant,
0.5 to 10% of gelling agent,
3 to 50% of solvent,
0.1 to 10% of plasticising agent, and
0.1 to 10% of other additives as defined in claim 11.

14. A containerisation system according to any one of the preceding claims wherein the gel has a viscosity of 500 to 30,000 centipoises.

15. A containerisation system according to claim 14 wherein the gel has a viscosity of 1,000 to 12,000 centipoises.

16. A containerisation system according to any one of the preceding claims wherein the gel has a phase different (phi) between the controlled shear stress and the resulting shear strain such that tg(phi) is less than or equal to 1.2.

17. A containerisation system according to any one of the preceding claims wherein the gel has a spontaneity less than 25.

18. A containerisation system according to any one of the preceding claims wherein the bag comprises a polyethylene oxide; a starch or modified starch; an alkyl or hydroxyalkylcellulose; a carboxyalkylcellulose; a polyvinylether; poly(2,4-dimethyl-6-triazolylethylene); poly(vinylsulfonic acid); a polyanhydride; a low molecular weight urea-formaldehyde resin; a low molecular weight melamine-formaldehyde resin; a polyacrylate, a polymethacrylate or polyacrylic acid or a homologue thereof.

19. A containerisation system according to claim 18, wherein the bag comprises a polyethylene oxide which is polyethylene glycol; a hydroxyalkylcellulose which is hydroxymethyl-, hydroxyethyl- or hydroxypropyl-cellulose; a carboxyalkyl-cellulose which is carboxymethyl-cellulose; a polyvinylether which is polymethylvinylether; or a polymethacrylate which is poly(2-hydroxyethyl methacrylate).

20. A containerisation system according to any one of the preceding claims wherein the bag comprises polyethylene oxide, methylcellulose, or polyvinyl alcohol.

21. A containerisation system according to claim 20, wherein the bag comprises polyvinyl alcohol which is 40 to 100% alcoholysed or hydrolysed polyvinyl acetate.

22. A containerisation system according to claim 21, wherein the polyvinyl alcohol is 80 to 99% alcoholysed or hydrolysed polyvinyl acetate.

23. Use of a compound which is able to reduce the glass transition temperature of polyvinyl alcohol to below room temperature in a water dispersible organic gel contained in a water soluble or water dispersible bag, as a plasticising agent which imparts and maintains softness in the bag, wherein the gel is a continuous system having a phase difference phi between the controlled shear stress and the resulting shear strain such that tg(phi) is less than or equal to 1.5 and having a spontaneity less than 75, and which gel comprises:
a hazardous product;
optionally organic solvent;
a water soluble or water dispersible surfactant;
a gelling agent; and
a plasticising agent.

24. Use according to claim 23 which imparts and maintains softness in the bag at a temperature below 0°C.

25. Use according to claim 23 or 24 of a glycol or triol, ethanolamine, dimethylformamide or dimethylsulphoxide.

## Patentansprüche

1. Containerisierungssystem, umfassend ein im Wasser dispergierbares organisches Gel in einem in Wasser löslichen oder in Wasser dispergierbaren Beutel, wobei das Gel ein kontinuierliches System ist mit einer Phasendifferenz ϕ zwischen der kontrollierten Scherspannung und der daraus resultierenden Schiebung, so daß tg(ϕ) kleiner oder gleich 1,5 ist, und mit einer Spontaneität von weniger als 75, und das umfaßt:
ein gefährliches Produkt,
gegebenenfalls ein organisches Lösungsmittel,
ein in Wasser lösliches oder in Wasser dispergierbares grenzflächenaktives Mittel,
ein gelbildendes Mittel und
einen Weichmacher, der eine Verbindung ist, die die Glasübergangstemperatur von Polyvinylalkohol auf unter Raumtemperatur verringern kann.

2. Containerisierungssystem nach Anspruch 1, wobei das gefährliche Produkt eine landwirtschaftliche Chemikalie ist.

3. Containerisierungssystem nach Anspruch 1 oder 2, wobei das gefährliche Produkt ein Pestizid, ein Pflanzenschutzmittel, ein Pflanzenwachstumsregulator oder ein Pflanzennährstoff ist.

4. Containerisierungssystem nach Anspruch 1, 2 oder 3, wobei das gelbildende Mittel ein Feststoff ist, der in einer Konzentration von mindestens 10 Gew.-% in Wasser und mindestens 10 Gew.-% in einem flüssigen Gemisch aus dem gefährlichen Produkt, dem grenzflächenaktiven Mittel und organischen Lösungsmittel, soweit vorhanden, bei einer Temperatur über 50°C löslich ist.

5. Containerisierungssystem nach Anspruch 4, wobei das gelbildende Mittel eine Teilchengröße von weniger als 40 µm hat.

6. Containerisierungssystem nach Anspruch 5, wobei das gelbildende Mittel eine Teilchengröße von weniger als 10 µm hat.

7. Containerisierungssystem nach einem der vorangehenden Ansprüche, wobei der Weichmacher ein Glykol oder Triol oder Ethanolamin, Dimethylformamid oder Dimethylsulfoxid ist.

8. Containerisierungssystem nach einem der vorangehenden Ansprüche, wobei der Weichmacher eine Verbindung ist, die in Wasser löslich oder in Wasser dispergierbar ist und in einer Konzentration von mindestens 0,1 Gew.-% in dem flüssigen Gemisch aus gefährlichem Produkt, dem grenzflächenaktiven Mittel und organischem Lösungsmittel, soweit vorhanden, löslich ist.

9. Containerisierungssystem nach einem der vorangehenden Ansprüche, wobei das grenzflächenaktive Mittel ein flüssiges Gemisch mit dem gefährlichen Produkt in einem organischen Lösungsmittel, soweit vorhanden, bei einer Temperatur über 70°C bilden kann.

10. Containerisierungssystem nach Anspruch 9, wobei das grenzflächenaktive Mittel ein flüssiges Gemisch mit dem gefährlichen Produkt in einem organischen Lösungsmittel, soweit vorhanden, bei einer Temperatur über 50°C bilden kann.

11. Containerisierungssystem nach einem der vorangehenden Ansprüche, wobei das Gel ferner eine oder mehrere der folgenden Substanzen umfaßt:
ein organisches Lösungsmittel oder ein Gemisch von Lösungsmitteln, in denen das gefährliche Produkt bei der Konzentration in dem Gel löslich ist,
ein Dispergiermittel,
ein Verdickungsmittel, das in Wasser löslich oder in Wasser dispergierbar ist und das in einer Konzentration von mindestens 5 Gew.-% in einem flüssigen Gemisch aus dem gefährlichen Produkt in einem organischen Lösungsmittel, soweit vorhanden, und grenzflächenaktivem Mittel löslich ist, und/oder
ein anderes Additiv, das ein Antischaummittel, ein Stabilisator, ein Puffer oder ein Frostschutzmittel ist.

12. Containerisierungssystem nach einem der vorangehenden Ansprüche, wobei das Gel, bezogen auf das Gewicht, umfaßt:
10 bis 90 % gefährliches Produkt,
1 bis 50 % grenzflächenaktives Mittel,
0,1 bis 50 % gelbildendes Mittel,
0 bis 80 % Lösungsmittel,
0,1 bis 20 % Weichmacher und
0 bis 20 % andere Additive, wie in Anspruch 11 definiert.

13. Containerisierungssystem nach einem der vorangehenden Ansprüche, wobei das Gel, bezogen auf das Gewicht, umfaßt:
25 bis 80 % gefährliches Produkt,
2 bis 20 % grenzflächenaktives Mittel,
0,5 bis 10 % gelbildendes Mittel,
3 bis 50 % Lösungsmittel,
0,1 bis 10 % Weichmacher und
0,1 bis 10 % andere Additive, wie in Anspruch 11 definiert.

14. Containerisierungssystem nach einem der vorangehenden Ansprüche, wobei das Gel eine Viskosität von 500 bis 30 000 cP hat.

15. Containerisierungssystem nach Anspruch 14, wobei das Gel eine Viskosität von 1 000 bis 12 000 cP hat.

16. Containerisierungssystem nach einem der vorangehenden Ansprüche, wobei das Gel eine Phasendifferenz (ϕ) zwischen der kontrollierten Scherspannung und der daraus resultierenden Schiebung hat, so daß tg(ϕ) kleiner als oder gleich 1,2 ist.

17. Containerisierungssystem nach einem der vorangehenden Ansprüche, wobei das Gel einen Spontaneität von weniger als 25 hat.

18. Containerisierungssystem nach einem der vorangehenden Ansprüche, wobei der Beutel ein Polyethylenoxid, eine Stärke oder modifizierte Stärke, eine Alkyl- oder Hydroxyalkylcellulose, eine Carboxyalkylcellulose, einen Polyvinylether, Poly(2,4-dimethyl-6-triazolylethylen), Poly(vinylsulfonSäure), ein Polyanhydrid, ein Harnstoff/Formaldehyd-Harz mit niedrigem Molekulargewicht, ein Melamin/FormaldehydHarz mit niedrigem Molekulargewicht, ein Polyacrylat, ein Polymethacrylat oder Polyacrylsäure oder ein Homologes davon umfaßt.

19. Containerisierungssystem nach Anspruch 18, wobei der Beutel ein Polyethylenoxid, das Polyethylenglykol ist, eine Hydroxyalkylcellulose, die Hydroxymethyl-, Hydroxyethyl- oder Hydroxypropylcellulose ist, eine Carboxyalkylcellulose, die Carboxymethylcellulose ist, einen Polyvinylether, der Polymethylvinylether ist, oder ein Polymethacrylat, das Poly(2-hydroxyethylmethacrylat) ist, umfaßt.

20. Containerisierungssystem nach einem der vorangehenden Ansprüche, wobei der Beutel Polyethylenoxid, Methylcellulose oder Polyvinylalkohol umfaßt.

21. Containerisierungssystem nach Anspruch 20, wobei der Beutel Polyvinylalkohol umfaßt, der 40 bis 100 % alkoholysiertes oder hydrolysiertes Polyvinylacetat ist.

22. Containerisierungssystem nach Anspruch 21, wobei der Polyvinylalkohol 80 bis 99 % alkoholysiertes oder hydrolysiertes Polyvinylacetat ist.

23. Verwendung einer Verbindung, die die Glasübergangstemperatur von Polyvinylalkohol auf unter Raumtemperatur in einem in Wasser dispergierbaren organischen Gel verringern kann, das in einem in Wasser löslichen oder in Wasser dispergierbaren Beutel enthalten ist, als Weichmacher, der dem Beutel Weichheit verleiht und aufrechterhält, wobei das Gel ein kontinuierliches System ist mit einer Phasendifferenz ϕ zwischen der kontrollierten Scherspannung und der daraus resultierenden Schiebung, so daß tg(ϕ) kleiner oder gleich 1,5 ist und mit einer Spontaneität von weniger als 75, wobei das Gel umfaßt:
ein gefährliches Produkt,
gegebenenfalls organisches Lösungsmittel,
ein in Wasser lösliches oder in Wasser dispergierbares grenzflächenaktives Mittel,
ein gelbildendes Mittel und
einen Weichmacher.

24. Verwendung nach Anspruch 23, die dem Beutel bei einer Temperatur unter 0°C Weichheit verleiht und aufrechterhält.

25. Verwendung nach Anspruch 23 oder 24 eines Glykols oder Triols, von Ethanolamin, Dimethylformamid oder Dimethylsulfoxid.

## Revendications

1. Système de conditionnement en récipient comprenant un gel organique dispersable dans l'eau dans un sac hydrosoluble ou dispersable dans l'eau, dans lequel le gel est un système continu ayant une différence de phase phi entre la tension de cisaillement contrôlée et la déformation de cisaillement résultante telle que tg(phi) soit inférieure ou égale à 1,5 et ayant une spontanéité inférieure à 75, et qui comprend :
un produit dangereux ;
facultativement, un solvant organique ;
un surfactant hydrosoluble ou dispersable dans l'eau ;
un agent gélifiant ; et
un plastifiant qui est un composé capable d'abaisser la température de transition vitreuse du polymère d'alcool vinylique à une valeur inférieure à la température ambiante.

2. Système de conditionnement en récipient suivant la revendication 1, dans lequel le produit dangereux est un agent agrochimique.

3. Système de conditionnement en récipient suivant la revendication 1 ou 2, dans lequel le produit dangereux est un pesticide, un agent de protection des végétaux, un régulateur de croissance de plantes ou une substance nutritive de végétaux.

4. Système de conditionnement en récipient suivant la revendication 1, 2 ou 3, dans lequel l'agent gélifiant est un agent solide soluble à une concentration d'au moins 10 % en poids dans l'eau et d'au moins 10 % en poids dans un mélange liquide du produit dangereux, du surfactant et du solvant organique, s'il est présent, à une température supérieure à 50°C.

5. Système de conditionnement en récipient suivant la revendication 4, dans lequel l'agent gélifiant a un diamètre de particules inférieur à 40 micromètres.

6. Système de conditionnement en récipient suivant la revendication 5, dans lequel l'agent gélifiant a un diamètre de particules inférieur à 10 micromètres.

7. Système de conditionnement en récipient suivant l'une quelconque des revendications précédentes, dans lequel le plastifiant est un glycol ou un triol ou l'étnanolamine, le diméthylformamide ou le diméthylsulfoxyde.

8. Système de conditionnement en récipient suivant l'une quelconque des revendications précédentes, dans lequel le plastifiant est un composé qui est hydrosoluble ou dispersable dans l'eau et qui est soluble à une concentration d'au moins 0,1 % en poids dans le mélange liquide du produit dangereux, du surfactant et du solvant organique, s'il est présent.

9. Système de conditionnement en récipient suivant l'une quelconque des revendications précédentes, dans lequel le surfactant est capable de former un mélange liquide avec le produit dangereux dans le solvant organique, s'il est présent, à une température supérieure à 70°C.

10. Système de conditionnement en récipient suivant la revendication 9, dans lequel le surfactant est capable de former un mélange liquide avec le produit dangereux dans le solvant organique, s'il est présent, à une température supérieure à 50°C.

11. Système de conditionnement en récipient suivant l'une quelconque des revendications précédentes, dans lequel le gel comprend en outre un ou plusieurs des constituants suivants :
un solvant organique ou un mélange de solvants dans lequel le produit dangereux est soluble à la concentration dans le gel ;
un dispersant ;
un épaississant qui est hydrosoluble ou dispersable dans l'eau et qui est soluble à une concentration d'au moins 5 % en poids dans un mélange liquide du produit dangereux dans le solvant organique, s'il est présent, et du surfactant ; et/ou
un autre additif qui est un agent antimousse, un stabilisant, un tampon ou un agent antigel.

12. Système de conditionnement en récipient suivant l'une quelconque des revendications précédentes, dans lequel le gel comprend, en poids :
10 à 90 % de produit dangereux,
1 à 50 % de surfactant,
0,1 à 50 % d'agent gélifiant,
0 à 80 % de solvant,
0,1 à 20 % de plastifiant, et
0 à 20 % d'autres additifs répondant à la définition suivant la revendication 11.

13. Système de conditionnement en récipient suivant la revendication 12, dans lequel le gel comprend, en poids :
25 à 80 % de produit dangereux,
2 à 20 % de surfactant,
0,5 à 10 % d'agent gélifiant,
3 à 50 % de solvant,
0,1 à 10 % de plastifiant, et
0,1 à 10 % d'autres additifs répondant à la définition suivant la revendication 11.

14. Système de conditionnement en récipient suivant l'une quelconque des revendications précédentes, dans lequel le gel a une viscosité comprise dans l'intervalle de 500 à 30 000 centipoises.

15. Système de conditionnement en récipient suivant la revendication 14, dans lequel le gel a une viscosité comprise dans l'intervalle de 1000 à 12 000 centipoises.

16. Système de conditionnement en récipient suivant l'une quelconque des revendications précédentes, dans lequel le gel présente une différence de phase (phi) entre la tension de cisaillement contrôlée et la déformation de cisaillement résultante telle que tg(phi) soit inférieure ou égale à 1,2.

17. Système de conditionnement en récipient suivant l'une quelconque des revendications précédentes, dans lequel le gel a une spontanéité inférieure à 25.

18. Système de conditionnement en récipient suivant l'une quelconque des revendications précédentes, dans lequel le sac comprend un polymère d'oxyde d'éthylène, un amidon ou amidon modifié ; une alkyl- ou hydroxyalkylcellulose ; une carboxyalkylcellulose ; un polymère d'éther vinylique ; un poly(2,4-diméthyl-6-triazolyléthylène) ; un poly(acide vinylsulfonique) ; un polyanhydride ; une résine urée-formaldéhyde de bas poids moléculaire ; une résine mélamine-formaldéhyde de bas poids moléculaire ; un polyacrylate, un polyméthacrylate ou un polymère d'acide acrylique ou un de ses homologues.

19. Système de conditionnement en récipient suivant la revendication 18, dans lequel le sac comprend un polymère d'oxyde d'éthylène qui consiste en polyéthylèneglycol ; une hydroxyalkylcellulose qui consiste en hydroxyméthyl-, hydroxyéthyl- ou hydroxypropylcellulose ; une carboxylalkylcellulose qui consiste en carboxyméthylcellulose ; un polymère d'éther vinylique qui consiste en un polymère d'éther de méthyle et de vinyle ; ou un polyméthacrylate qui consiste en poly(méthacrylate de 2-hydroxy-éthyle.

20. Système de conditionnement en récipient suivant l'une quelconque des revendications précédentes, dans lequel le sac comprend un polymère d'oxyde d'éthylène, de la méthylcellulose ou un polymère d'alcool vinylique.

21. Système de conditionnement en récipient suivant la revendication 20, dans lequel le sac comprend un polymère d'alcool vinylique qui consiste en un polymère d'acétate de vinyle ayant subi 40 à 100 % d'alcoolyse ou d'hydrolyse.

22. Système de conditionnement en récipient suivant la revendication 21, dans lequel le polymère d'alcool vinylique consiste en un polymère d'acétate de vinyle ayant subi 80 à 99 % d'alcoolyse ou d'hydrolyse.

23. Utilisation d'un composé qui est capable d'abaisser la température de transition vitreuse d'un polymère d'alcool vinylique à une valeur inférieure à la température ambiante dans un gel organique dispersable dans l'eau présent dans un sac hydrosoluble ou dispersable dans l'eau, comme agent plastifiant qui confère et maintient une souplesse dans le sac, dans lequel le gel est un système continu ayant une différence de phase phi entre la tension de cisaillement contrôlée et la déformation de cisaillement résultante telle que tg(phi) soit inférieure ou égale à 1,5 et présentant une spontanéité inférieure à 75, gel qui comprend :
un produit dangereux ;
facultativement,un solvant organique ;
un surfactant hydrosoluble ou dispersable dans l'eau ;
un agent gélifiant ; et
un plastifiant.

24. Utilisation suivant la revendication 23, qui confère et maintient la souplesse dans le sac à une température inférieure à 0°C.

25. Utilisation suivant la revendication 23 ou 24 d'un glycol ou triol, d'éthanolamine, de diméthylformamide ou de diméthylsulfoxyde.
